# EUROPEAN PATENT SPECIFICATION

(11) **EP 2 783 955 B1**
(45) Date of publication and mention of the grant of the patent: **02.12.2015**
(21) Application number: 13195267.3
(22) Date of filing: 02.12.2013
(51) Int. Cl.: B62J 7/00, B62J 7/04

(54) **Rear portion structure for saddle type vehicle**
Hinterstruktur für Sattelfahrzeug
Structure de la partie arrière d'un véhicule de type à enfourcher

(30) Priority: 13.12.2012 JP 2012272425
(43) Date of publication of application: 01.10.2014
(73) Proprietor: Honda Motor Co., Ltd., Tokyo 107-8556 (JP)
(72) Inventor: Komatsu, Yoji, Wako-shi, Saitama 351-0193 (JP); Karube, Shinichi, Wako-shi, Saitama 351-0193 (JP); Ykoyama, Shin, Wako-shi, Saitama 351-0193 (JP); Inada, Kaori, Wako-shi, Saitama 351-0193 (JP); Fusano, Tomoki, Wako-shi, Saitama 351-0193 (JP); Kasai, Takaaki, Wako-shi, Saitama 351-0193 (JP)
(74) Representative: Stevens, Jason Paul

(56) References cited:
- BR-A- 9 401 919
- CN-Y- 201 086 768
- JP-A- 2011 057 071
- KR-Y1- 200 183 318

## Description

The present invention relates to improvements in or relating to a rear portion structure for a saddle type vehicle.

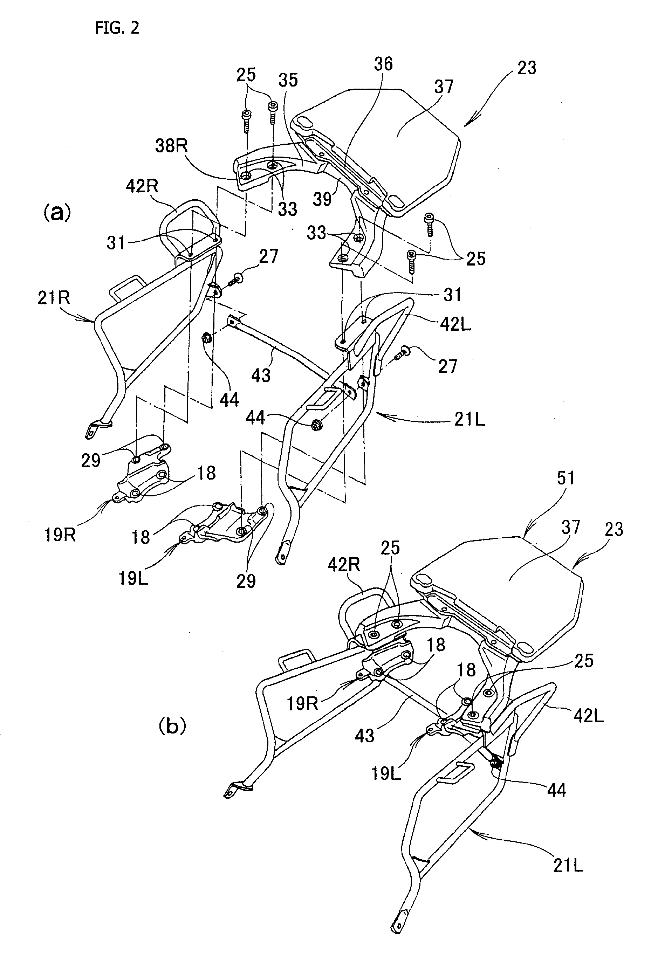

A saddle type vehicle is known wherein a side bag supporting stay for supporting a side bag for accommodating articles is provided at a rear portion of the vehicle (see, for example, FIGS. 2, 3 and 5 of Japanese Patent Laid-Open No. 2011-57071).

As shown in FIGS. 2, 3 and 5 of JP 2011-57071, side bag supporting stays (denoted by the reference numerals 55L and 55R in JP 2011-57071) are individually attached to grab rail stays (125L and 125R in JP 2011-57071) and pillion step stays (97L and 97R in JP 2011-57071) provided on a vehicle body (50 in JP 2011-57071) side. If the shape of the side bag supporting stays is changed, then it is necessary to change the positions of the vehicle body side attaching portions. If the positions of the vehicle body side attaching portions are changed, then it is necessary to prepare a plurality of vehicle body frames, with the vehicle body side attaching portions in different positions. Further, in order to use the plurality of vehicle body frames while maintaining a predetermined assembly productivity, significant remodelling of the main assembly line can be required.

An alternative form of motorcycle, which has a single fixed form of rear structure, is shown in BR 9401919.

The document BR940919 respresents the closest prior art.

Thus, a technology which can suppress or avoid this increase of types of vehicle body frames, even where various attaching parts such as side bag supporting stays are different among different vehicle models and as variations of vehicle models increase, is desired.

It is an object of the present invention to provide a technique which can avoid or suppress an increase of the number of required types of a vehicle body frame, even when differing parts are attached.

According to a first aspect of the present invention, this object is met by a rear portion structure for a saddle type vehicle which includes a vehicle body frame, a seat attached to the vehicle body frame and capable of seating a rider and a passenger, and a stay supporting portion provided on the vehicle body frame below the seat and supporting a stay member thereon, and various parts attached to the stay member, wherein: the various parts include a side bag supporting member with an integrated grip portion for being gripped by a passenger on the vehicle and which supports a side bag, and a carrier member for supporting an article of luggage; a first fastening hole is provided in the stay member; a second fastening hole is provided in the side bag supporting member; a fourth fastening hole is provided in the carrier member; the stay member extends laterally outwardly further than the seat; and the second fastening hole or the second fastening hole and the fourth fastening hole are aligned with the first fastening hole, and the side bag supporting member with the integrated grip portion or the side bag supporting member with the integrated grip portion and the carrier member are fastened to the stay member by a fastening member or members.

With this arrangement, the rear portion of the motorcycle has the stay supporting portion provided on the vehicle body frame and supporting the stay member thereon, and the various parts are selectively attached to the stay member.

In an assembly procedure, the side bag supporting member (and optionally the carrier member) is fastened to the stay member. Then, the stay member to which the side back supporting member (and optionally the carrier member) is fastened is attached to the stay supporting portion of the vehicle body frame.

A selected one or two parts can be fastened to the stay member, and the common stay member to which the various parts are fastened is attached to the stay supporting portion of the vehicle body frame. Since attaching portions of the various parts are fastened by the common stay member and attached to the vehicle body frame, an increase in the number of required types of vehicle body frame can be suppressed, and the vehicle cost can be reduced.

According to a second aspect of the present invention, this same object is met by a rear portion structure for a saddle type vehicle which includes a vehicle body frame, a seat attached to the vehicle body frame and capable of seating a rider and a passenger, and a stay supporting portion provided on the vehicle body frame below the seat and supporting a stay member thereon, and various parts attached to the stay member, wherein: the various parts include at least two of a side bag supporting member for supporting a side bag, a grip for being gripped by a passenger on the vehicle, and a carrier member for supporting an article of luggage; a first fastening hole is provided in the stay member; a second fastening hole is provided in the side bag supporting member; a third fastening hole is provided in the grip; a fourth fastening hole is provided in the carrier member; the stay member extends laterally outwardly further than the seat; and at least two of the second fastening hole, third fastening hole and fourth fastening hole are aligned with the first fastening hole, and two or all three of the side bag supporting member, grip, and carrier member are fastened together to the stay member.

With this arrangement, the rear portion of the motorcycle includes the stay supporting portion provided on the vehicle body frame and supporting the stay member thereon, and the various parts are selectively attached to the stay member.

In an assembly procedure, at least two of the side bag supporting member, grip, and carrier member are fastened together to the stay member, and the stay member to which at least two or all three of the parts described above are fastened together by the fastening member is fastened to the stay supporting portion of the vehicle body frame.

Since the various parts are attached to the stay supporting portion of the vehicle body frame through the common stay member, an increase in the number of required types of vehicle body frame can be suppressed, and the vehicle cost can be reduced. Further, when new variations of the vehicle model are introduced, a significant change of a production line is not required.

Further, in comparison with an alternative case in which at least two of the parts are fastened individually to vehicle body frames or at least two of the parts are individually fastened to stay members, if two or all three of the parts are fastened together to the stay member (as in the present invention), the installation man-hours can be reduced and a reduction of the quantity of fastening parts can be anticipated.

Preferably, the stay member is a forged steel part which extends horizontally and includes an outer side portion positioned laterally outwardly further than the seat, and is disposed between the seat and a rear cowl which covers a side of a rear portion of the vehicle body frame; and, when the seat is removed, the stay supporting portion is open upwardly.

By disposing the stay member between the seat and the rear cowl, the seat can be disposed in the proximity of the rear cowl and the height of the seat can be kept low. In addition, by disposing the seat in the proximity of the rear cowl, the gap between the seat and the rear cowl can be decreased, so that entry of water to the inner side of the vehicle body becomes less likely.

Further, since the stay supporting portion is open upwardly, a fastening tool can be moved toward the stay supporting portion from above. Accordingly, with the stay supporting portion open upwardly, the stay member to which the various parts are fastened can be readily attached to the stay supporting portion.

Preferably, two front and rear hole portions to be fastened to the stay supporting portion are provided in the stay member; and a first rib which extends in the direction of the vehicle body frame below the seat and projects upwardly so as to be higher than a lower end of a lateral side portion of the seat, and a second rib which extends so as to connect the two front and rear hole portions to each other laterally inwardly from the first rib, are formed at a laterally inner side portion of the stay member.

Since the second rib extends so as to connect the two hole portions to each other, laterally inwardly of the first rib, even if water passes over the first rib, entry of water into the inner side of the vehicle body can be stopped by the second rib. By means of this second rib, entry of water into the inside of the vehicle body can be prevented with a higher degree of certainty.

In a further preferred form, the stay member is disposed so as to be inclined forwardly downwardly, and a drain hole disposed laterally inwardly from the first rib for discharging water therethrough is formed at a front portion of the stay member.

Since the stay member is inclined forwardly downwardly, and the drain hole is provided at a front portion of the stay member, even if water entering from the outside of the vehicle body passes over the first rib, the water flows downwardly along the slope and is discharged from the drain hole. As a result, the water passing over the first rib can be discharged readily.

Preferably, the side bag supporting member includes a pair of upper and lower pipe-shaped stays extending in a longitudinal direction of the vehicle; the side bag includes an upper stay supporting portion and a lower stay supporting portion locked from above to the paired upper and lower pipe-shaped stays; and the upper stay supporting portion and the lower stay supporting portion are locked by the paired upper and lower pipe-shaped stays each through with elastic members interposed therebetween.

Since the side bag has an upper stay supporting portion and a lower stay supporting portion, if a vehicle has a pipe-shaped stay at one of the upper and lower portions, then the side bag can be used with that vehicle. In addition, in a vehicle of a type which does not have a pipe-shaped state but has (for example) a side bag attaching hole in the rear cowl, a side bag can be used by hanging the stay supporting portion of the side bag in the side bag mounting hole.

Preferably, the side bag includes a container portion and a lid portion which covers the container portion; and a plurality of ribs for allowing the lid portions to be guided and fitted smoothly are formed on the container portion and point in the direction of the lid portion, and a further rib for preventing water from entering extends perpendicular to the ribs.

With this arrangement, the side bag is configured from a container portion and a lid portion which covers the container portion. The ribs and the further rib are provided on the container portion. Since the ribs are provided, when the lid portion is closed onto the container portion, the lid portion can be fitted smoothly into the container portion. Further, since the further rib is provided, water becomes less likely to enter the container, as it must pass over the further rib, and so entry of water into the container can be made more difficult.

A preferred embodiment of the invention will now be described by way of example only, and with reference to the accompanying drawings, in which:
FIG. 1 is a perspective view of a rear portion of a motorcycle in which a side bag supporting member with an integrated grip portion and a carrier member are provided (shown in a state with a seat removed);
FIG. 2 is an exploded perspective view showing how various parts are attached to a stay member to assemble a first subassembly;
FIG. 3 is an exploded perspective view showing how the first subassembly assembled in FIG. 2 is attached to a stay supporting portion;
FIG. 4 is a perspective view of a rear portion of a motorcycle in which a grip and a carrier member are provided (shown in a state with a seat removed);
FIG. 5 is an exploded perspective view showing how various parts are attached to a stay member to assemble a second subassembly;
FIG. 6 is an exploded perspective view showing how the second subassembly assembled in FIG. 5 is attached to a stay supporting portion;
FIG. 7 is a perspective view of a rear portion of a motorcycle in which a side bag supporting member with an integrated grip member is provided (shown in a state with a seat removed);
FIG. 8 is an exploded perspective view showing how various parts are attached to a stay member to assemble a third subassembly;
FIG. 9 is an exploded perspective view showing how the third subassembly assembled in FIG. 8 is attached to a stay supporting portion;
FIG. 10 is a perspective view of a rear portion of a motorcycle in which a side bag supporting member and a carrier member are provided (shown in a state with a seat removed);
FIG. 11 is an exploded perspective view showing how various parts are attached to a stay member to assemble a fourth subassembly;
FIG. 12 is an exploded perspective view showing how the fourth subassembly assembled in FIG. 11 is attached to a stay supporting portion;
FIG. 13 is a sectional view taken along line 13-13 of FIG. 1;
FIG. 14 is a plan view of a stay member fastened to a stay supporting portion;
FIG. 15 is a sectional view taken along line 15-15 of FIG. 14;
FIG. 16 is a perspective view of the third subassembly to which a side bag is attached;
FIG. 17 is a sectional view taken along line 17-17 of FIG. 16;
FIG. 18 is an enlarged view of a portion denoted by 18 in FIG. 16 (shown in a state with a lid member removed); and
FIG. 19 is a sectional view taken along line 19-19 of FIG. 18.

In the following, an embodiment of the present invention will be described in detail. In the figures and the embodiment, words such as "up", "down", "front", "rear", "left" and "right" and the like indicate directions as viewed from a rider who is riding on a motorcycle.

An example of the present invention is described with reference to the drawings. In the following, a structure wherein some parts are selected from among a plurality of types of parts (hereinafter referred to as various parts) of a rear portion of a saddle type vehicle (motorcycle 10) and are attached to a vehicle body frame 11 is described.

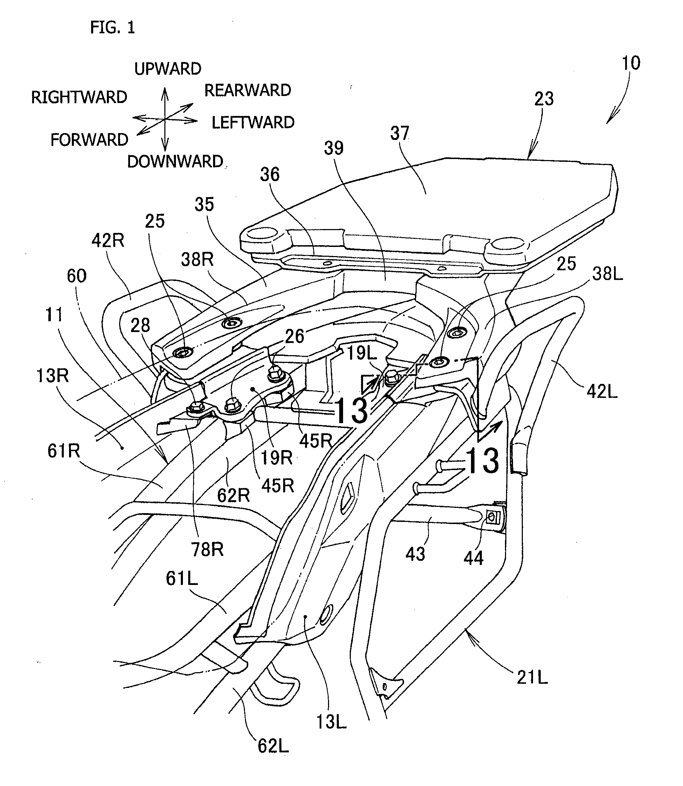

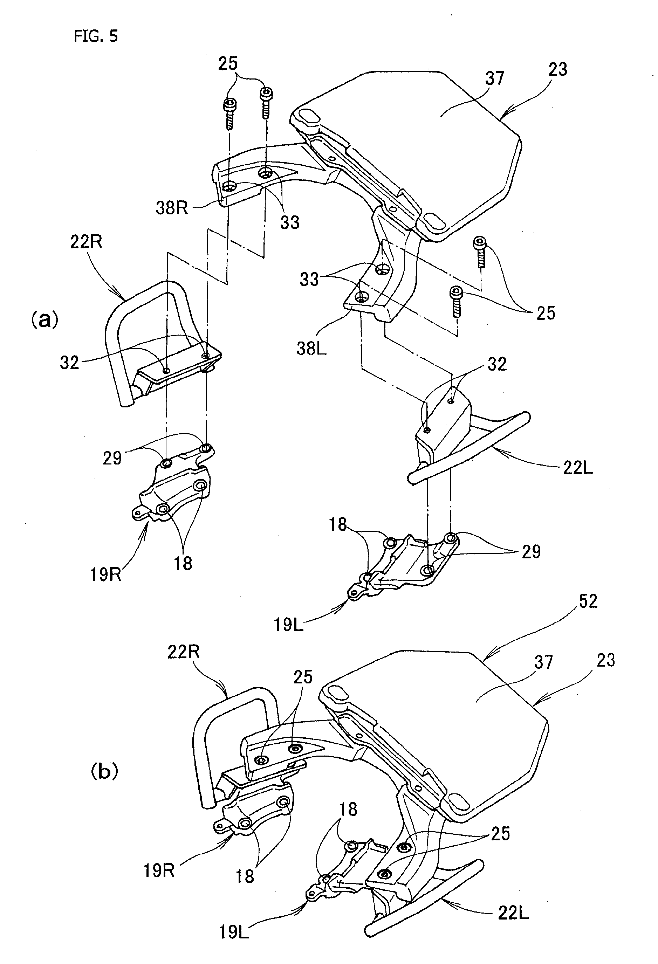

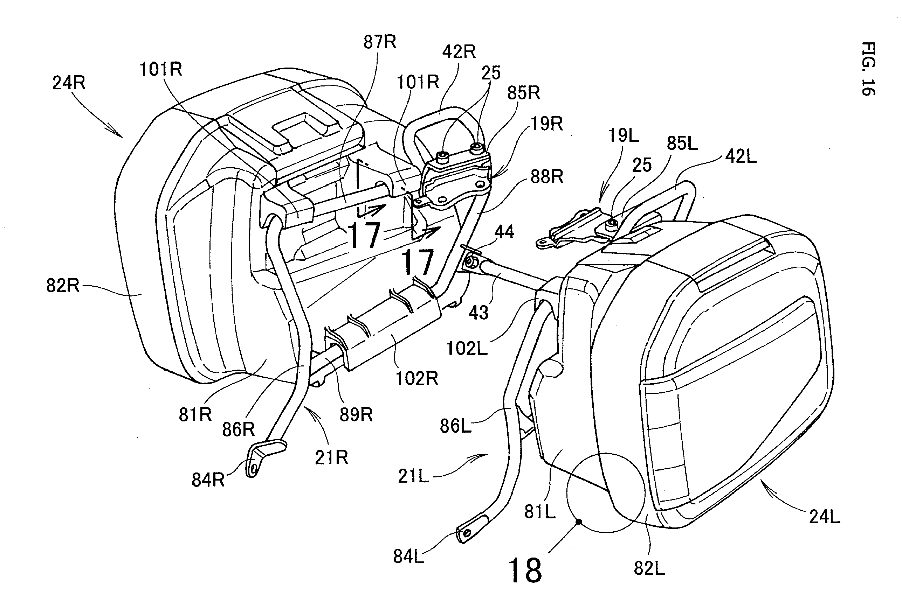

The various parts include side bag supporting members 21 L and 21 R, grips 22L and 22R, and a carrier member 23. Here, the side bag supporting members 21 L and 21 R (only 21 L is shown in FIG. 1) are members for supporting side bags to be described later (24L and 24R in FIG. 16), and the grips (22L and 22R in FIG. 5) are members which can be gripped by a passenger on the motorcycle. The carrier member 23 is a member for supporting an item of luggage.

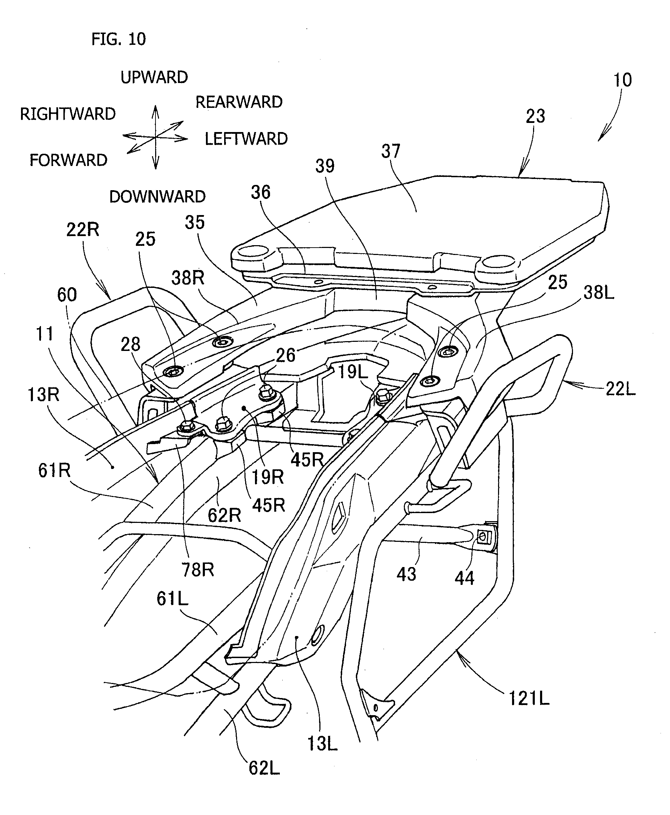

Here, grip members 42L and 42R which are gripped by a passenger on the motorcycle can be soldered to and integrated with the side bag supporting members 21 L and 21 R of the type shown in FIG. 1. As an alternative, a grip member is not integrated with the side bag supporting members 121 L and 121 R of the type shown in FIG. 10, but is formed as a separate part.

In the description, four representative types of assembly, called first to fourth variations, form part of the rear portion structure of a saddle type vehicle according to the present invention and are described in detail.

In a first variation, described with reference to FIGS. 1 to 3, a carrier member and side bag supporting members integrated with grip members to be gripped by the passenger on a motorcycle are subassembled to stay members to form a subassembly, and the subassembled side bag supporting members 21 L and 21 R and carrier member 23 are attached to a vehicle body frame 11.

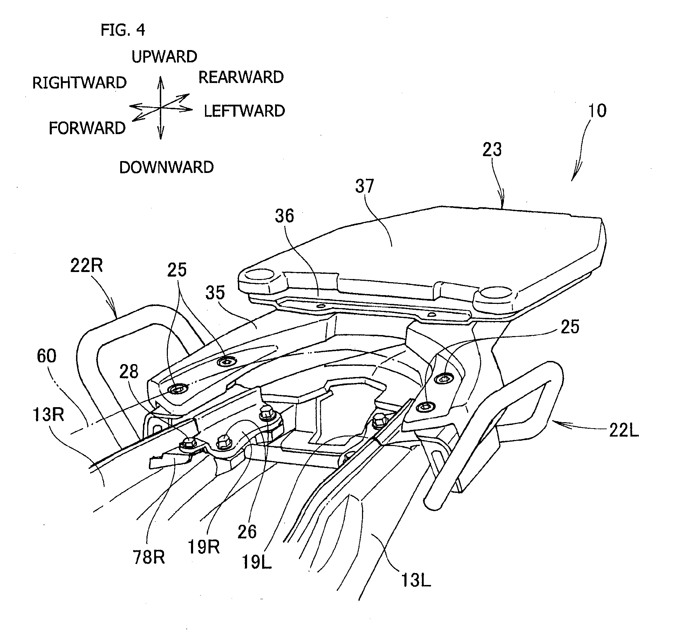

In a second variation, described with reference to FIGS. 4 to 6, grips to be gripped by a passenger on a motorcycle and a carrier member are subassembled to stay members, and the subassembled grips and carrier members are attached to a vehicle body frame.

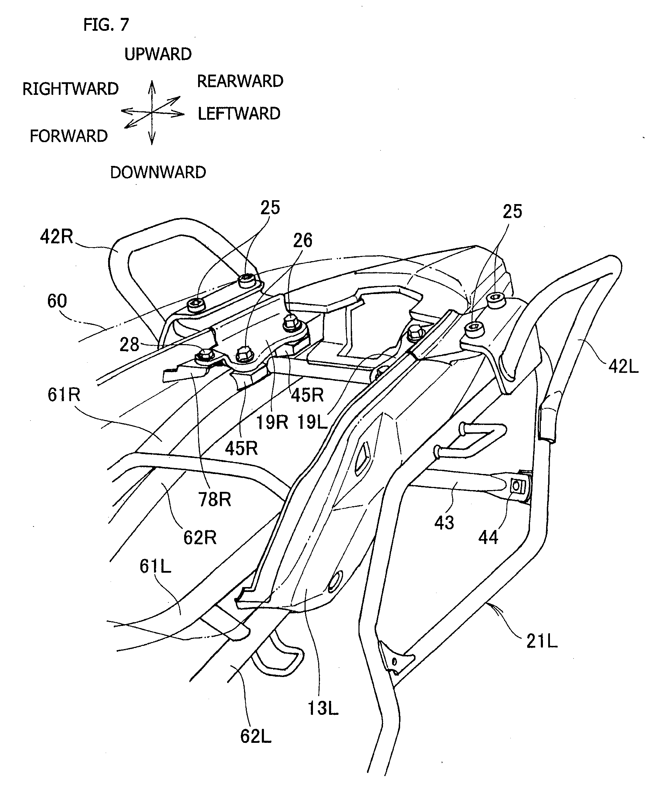

In a third variation, described with reference to FIGS. 7 to 9, side bag supporting members integrated with grip members for being gripped by a passenger on a motorcycle are subassembled to stay members, and the subassembled side bag supporting members are attached to a vehicle body frame.

In a fourth variation, described with reference to FIGS. 10 to 12, side bag supporting members which do not include a grip member, grips formed as independent parts, and a carrier member are subassembled to stay members, and the subassembled side bag supporting members, grips, and carrier member are attached to a vehicle body frame.

First, the first variation will be described.

As shown in FIG. 1, a vehicle body frame 11 is provided at a rear portion of a motorcycle 10, and stay members 19L and 19R are attached to the vehicle body frame 11. Side bag supporting members 21 L and 21 R (only 21 L is shown in FIG. 1) and a carrier member 23 are attached to the stay members 19L and 19R. On the laterally inner side of the side bag supporting members 21 L and 21 R and the laterally outer side of the vehicle body frame 11 are located rear cowls 13L and 13R, which cover the vehicle body frame 11. The side bag supporting members 21 L and 21 R support side bags 24L and 24R (refer to FIG. 16), and grip members 42L and 42R which can be gripped by a passenger on the motorcycle are integrated with the side bag supporting members 21 L and 21 R.

The side bag supporting members 21 L and 21 R are formed from pipe-like members which are shaped to have a substantially rectangular shape as viewed in a side elevation of the vehicle. The grip members 42L and 42R to be gripped by the passenger on the motorcycle are provided integrally with the side bag supporting members 21 L and 21 at the rear portion of the vehicle. Meanwhile, the carrier member 23 includes a U-shaped member 35 connected to the stay members 19L and 19R, a carrier stay 36 attached to a rear end of the U-shaped member 35, and a carrier main body 37 attached to the carrier stay 36 for receiving an article of luggage or the like placed thereon.

The U-shaped member 35 includes left and right arm portions 38L and 38R, and a bridging portion 39 extending between the left and right arm portions 38L and 38R, and is substantially U-shaped in plan view. The U-shaped member 35 is disposed such that the opening of the U faces towards the front of the vehicle, and the bridging portion 39 is positioned at the rear. The left and right arm portions 38L and 38R are attached to the stay members 19L and 19R by fastening members 25, respectively. The carrier stay 36 is attached to the bridging portion 39 positioned at the rear.

FIG. 2(a) is an exploded perspective view showing how the side bag supporting members 21 L and 21 R and the carrier member 23 are to be attached to the stay members 19L and 19R. FIG. 2(b) is a perspective view showing a first subassembly 51 wherein the side bag supporting members 21 L and 21 R and the carrier member 23 are attached to the stay members 19L and 19R.

Referring to FIG. 2(a), two front and rear first fastening holes 29 in which female threaded portions are formed are provided in each of the stay members 19L and 19R, and two second fastening holes 31 are provided on each of the side bag supporting members 21 L and 21 R so as to correspond to the positions of the first fastening holes 29. Further, two fourth fastening holes 33 are provided on each of the arm portions 38L and 38R of the carrier member 23. When the side bag supporting members 21 L and 21 R and the carrier member 23 are placed in this order on the stay members 19L and 19R, the second fastening holes 31 and the fourth fastening holes 33 are aligned with the first fastening holes 29. Then, the side bag supporting members 21 L and 21 R and the carrier member 23 are fastened to the stay members 19L and 19R from above by a plurality of fastening members 25.

Further, a cross stay 43 which connects the side bag supporting members 21 L and 21 R to each other is connected to extend between the side bag supporting members 21 L and 21 R. The cross stay 43 is fastened at opposite end portions thereof to portions toward the end of the side bag supporting members 21 L and 21 R by fastening members 27 and nuts 44.

FIG. 2(b) shows the side bag supporting members 21 L and 21 R and the carrier member 23, which are in a state superposed one on the other, fastened together to the stay members 19L and 19R by a plurality of fastening members 25. In the following description the assembly consisting of the side bag supporting members 21 L and 21 R and the carrier member 23 which are fastened together to the stay members 19L and 19R by the fastening members 25 are referred to as the first subassembly 51.

The side bag supporting members 21 L and 21 R and the carrier member 23 are fastened together to a plurality of first fastening holes 29 provided on the stay members 19L and 19R using the fastening members 25. However, fastening holes may be provided separately on the stay members 19L and 19R such that the members mentioned are individually fastened to the separate fastening holes without fastening the side bag supporting members 21 L and 21 R and the carrier member 23 together.

Now, an example wherein the first subassembly 51 (wherein the side bag supporting members 21 L and 21 R and the carrier member 23 are fastened together) is attached to stay supporting portions 45L and 45R of the vehicle body frame 11 is described.

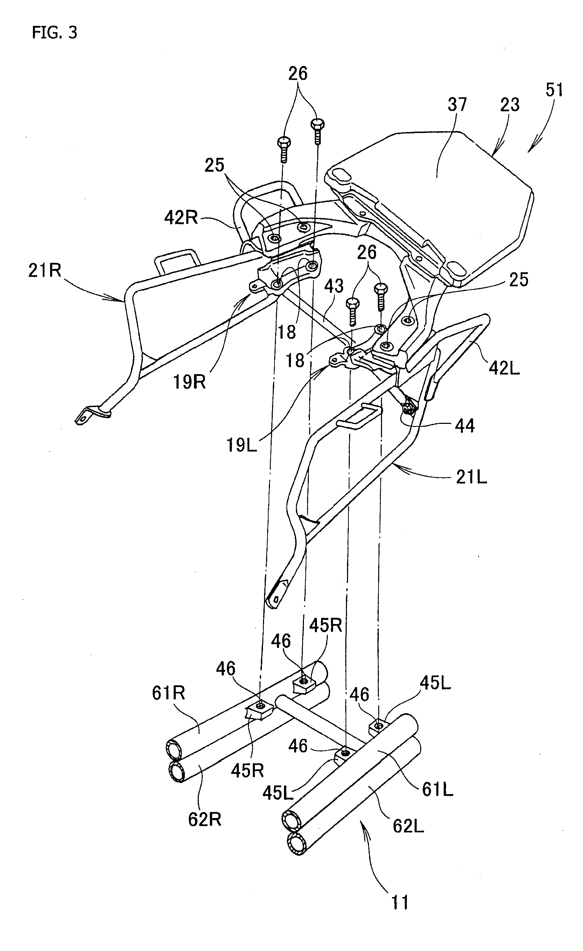

As shown in FIG. 3, two front and rear hole portions 18 to be individually attached to the vehicle body frame 11 (refer to FIG. 1) are provided on each of the stay members 19L and 19R, laterally inwards from the first fastening holes 29 (refer to FIG. 2). A plurality of stay fastening holes 46 are provided on the stay supporting portions 45L and 45R in a corresponding relationship to the front and rear hole portions 18. Female threaded portions are formed in the stay fastening holes 46, and the stay members 19L and 19R (to which the side bag supporting members 21 L and 21 R and the carrier member 23 are fastened) are fastened to the stay supporting portions 45L and 45R by a plurality of fastening members 26, with the hole portions 18 aligned with the stay fastening holes 46.

It should be noted that, while the side bag supporting members 21 L and 21 R are shown with the grip members 42L and 42R integrated therewith, side bag supporting members which do not include grip members 42L and 42R may be used instead.

Now, the second variation will be described.

As shown in FIG. 4, a vehicle body frame 11 is provided at a rear portion of a motorcycle 10, and stay members 19L and 19R are attached to the vehicle body frame 11. The stay members 19L and 19R have grips 22L and 22R and a carrier member 23 attached thereto. Rear cowls 13L and 13R which cover the vehicle body frame 11 are disposed laterally inwardly of the grips 22L and 22R and laterally outwardly of the vehicle body frame 11.

FIG. 5(a) is an exploded perspective view showing how the grips 22L and 22R and the carrier member 23 are attached to the stay members 19L and 19R, and FIG. 5(b) is a perspective view showing a second subassembly 52 wherein the grips 22L and 22R and the carrier member 23 are attached to the stay members 19L and 19R.

Referring to FIG. 5(a), two front and rear first fastening holes 29 in which female threaded portions are formed are provided in each of the stay members 19L and 19R, and third fastening holes 32 are provided on the grips 22L and 22R and fourth fastening holes 33 are provided in the carrier member 23 so as to correspond with the positions of the first fastening holes 29. Further, the grips 22L and 22R and the carrier member 23 are placed one on the other in this order on the stay members 19L and 19R, and the third fastening holes 32 and the fourth fastening holes 33 are aligned with the first fastening holes 29 so that the grips 22L and 22R and the carrier member 23 can be fastened together with the stay members 19L and 19R from above by a plurality of fastening members 25.

FIG. 5(b) shows the grips 22L and 22R and the carrier member 23, which are in a state superposed with each other, fastened to the stay members 19L and 19R by a plurality of fastening members 25. In the following, the grips 22L and 22R and the carrier member 23 fastened together to the stay members 19L and 19R by the fastening members 25 are referred to as a second subassembly 52.

The grips 22L and 22R and the carrier member 23 are fastened together to a plurality of first fastening holes 29 provided in the stay members 19L and 19R using the fastening members 25. However, as an alternative, separate fastening holes may be formed in the stay members 19L and 19R such that the members mentioned are fastened to the separate fastening holes without depending upon the fastening together of the grips 22L and 22R and the carrier member 23.

Now, an example in which the second subassembly 52 (wherein the grips 22L and 22R and the carrier member 23 are fastened together) is attached to the stay supporting portions 45L and 45R of the vehicle body frame 11 is described.

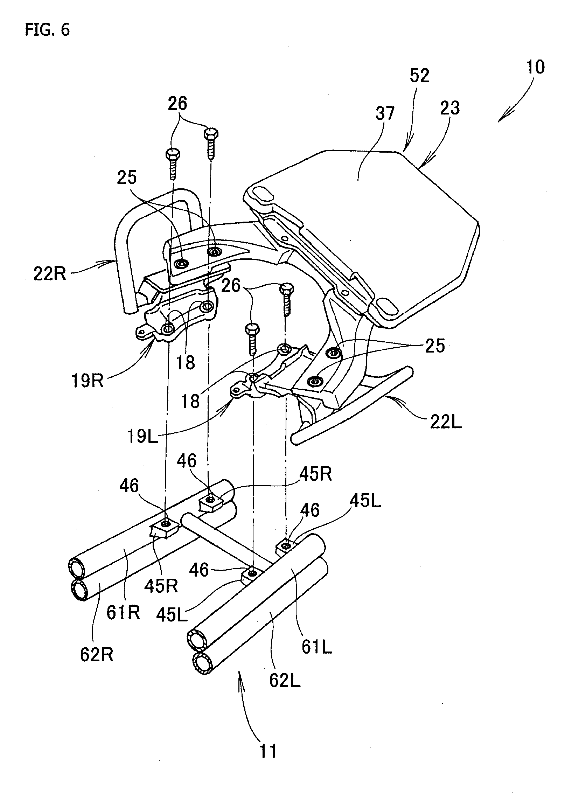

As shown in FIG. 6, front and rear hole portions 18 to be attached to the vehicle body frame 11 are provided in the stay members 19L and 19R, laterally inwards of the first fastening holes (reference numeral 29 in FIG. 5). Two stay fastening holes 46 are provided in each of the stay supporting portions 45L and 45R in an aligned relationship with the hole portions 18. Female threaded portions are provided in the stay fastening holes 46, and with the hole portions 18 aligned with the stay fastening holes 46, the stay members 19L and 19R (to which the grips 22L and 22R and the carrier member 23 are fastened) are fastened to the stay supporting members 45L and 45R by a plurality of fastening members 26.

Construction of the rear portion structures for a saddle type vehicle described above is described.

Referring also to FIG. 3, in the procedure for assembling various parts to the vehicle body frame 11, the side bag supporting members 21 L and 21 R and the carrier member 23 are fastened together to the stay members 19L and 19R in advance (or the grips 22L and 22R and the carrier member 23 are fastened together to the stay members 19L and 19R in advance). Then, the stay members 19L and 19R to which the side bag supporting members 21 L and 21 R and the carrier member 23 are fastened together (or the stay members 19L and 19R to which the grips 22L and 22R and the carrier member 23 are fastened together) are attached to the stay supporting portions 45L and 45R of the vehicle body frame 11. In other words, the first subassembly 51 or the second subassembly 52 is attached to the vehicle body frame 11.

Usually, on a main assembly line, the stay members 19L and 19R are attached to the stay supporting portions 45L and 45R of the vehicle body frame 11, and then at least one part of the side bag supporting members 21 L and 21 R, carrier member 23, and grips 22L and 22R is attached to the stay members 19L and 19R. If the type and the number of parts to be attached to a rear portion of a vehicle body is different, depending upon the vehicle model, then the number of assembly steps on the main assembly line can differ depending upon the vehicle model, and the workload can thus differ depending upon the number of steps. Therefore, when the number of variations of vehicle model is to be increased, the main assembly line may need to be modified significantly. Such modification of the main assembly line leads to increase of the facility cost.

However, in the present invention, various parts are assembled to the stay members 19L and 19R to form a subassembly on a sub line in advance, and the stay members 19L and 19R with which the various parts are integrated (namely, the first subassembly or the second subassembly) is attached to the stay supporting portions 45L and 45R of the vehicle body frame 11. Therefore, there is no change in the number of assembly steps on the main assembly line. As a result, the assembly productivity of the vehicle on the main assembly line can be improved.

Further, it is possible to fasten two selected parts together to the stay members 19L and 19R, and the stay members 19L and 19R to which the various parts are fastened together are then attached to the stay supporting portions 45L and 45R of the vehicle body frame 11. In other words, since the various parts are attached to the vehicle body frame 11 through the common stay members 19L and 19R, the required number of types of vehicle body frame 11 can be reduced and the vehicle cost can be reduced. In addition, there is no need to modify the main assembly line. Since the common stay members 19L and 19R are used, it is possible to flexibly cope with a change of vehicle model. As a result, the productivity in assembly can be improved further.

Now, the third variation will be described.

As shown in FIG. 7, a vehicle body frame 11 (refer to FIG. 1) is provided at a rear portion of a motorcycle 10, and stay members 19L and 19R are attached to the vehicle body frame 11. Further, side bag supporting members 21 L and 21 R are attached to the stay members 19L and 19R. Rear cowls 13L and 13R which cover the vehicle body frame 11 are disposed laterally inside of the side bag supporting members 21 L and 21 R and laterally outside of the vehicle body frame 11.

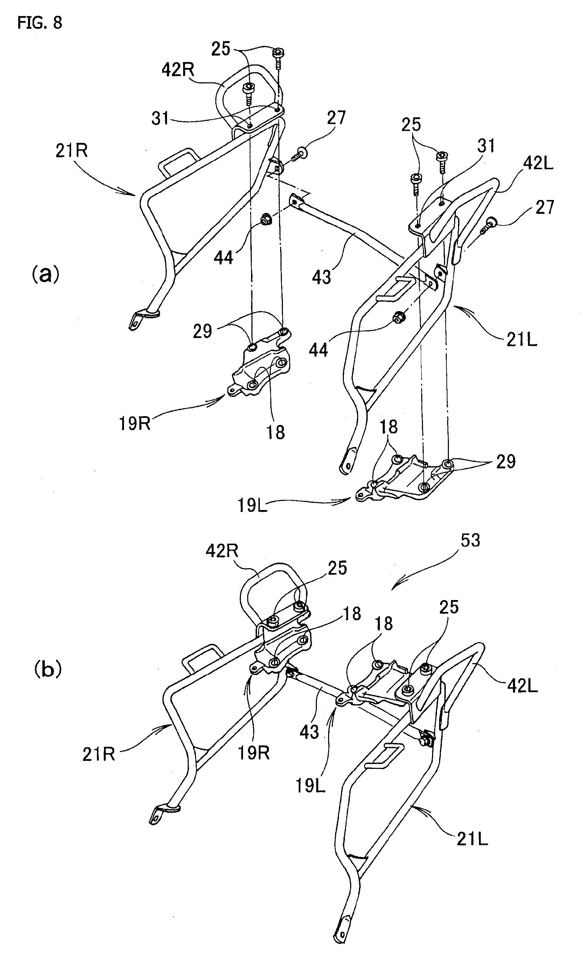

FIG. 8(a) is an exploded perspective view showing how the side bag supporting members 21 L and 21 R are to be attached to the stay members 19L and 19R, and FIG. 8(b) is a perspective view showing a third subassembly 53 wherein the side bag supporting members 21 L and 21 R are attached to the stay members 19L and 19R.

Referring to FIG. 8(a), two front and rear first fastening holes 29 in each of which a female threaded portion is formed are provided in the stay members 19L and 19R, and second fastening holes 31 are provided in the side bag supporting members 21 L and 21 R so as to correspond to the positions of the first fastening holes 29. Two front and rear hole portions 18 to be attached to the vehicle body frame 11 are provided in each of the stay members 19L and 19R, laterally inwardly of the first fastening holes 29. The side bag supporting members 21 L and 21 R are placed on the stay members 19L and 19R and the second fastening holes 31 are aligned with the first fastening holes 29, and then the side bag supporting members 21 L and 21 R are fastened to the stay members 19L and 19R from above by a plurality of fastening members 25.

Further, a cross stay 43 which connects the side bag supporting members 21 L and 21 R to each other extends between the side bag supporting members 21 L and 21 R. The cross stay 43 is fastened at opposite ends thereof to portions near the rear of the side bag supporting members 21 L and 21 R by fastening members 27 and nuts 44.

FIG. 8(b) shows the side bag supporting members 21 L and 21 R, which are in a superposed relationship with each other, fastened to the stay members 19L and 19R by a plurality of fastening members 25. In the following description, the side bag supporting members 21 L and 21 R which are fastened to the stay members 19L and 19R by the fastening members 25 are referred to as the third subassembly 53.

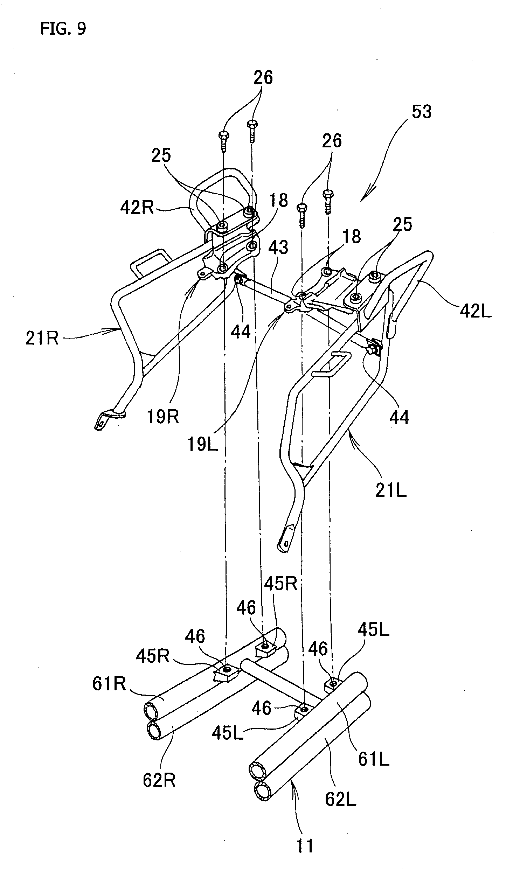

As shown in FIG. 9, stay fastening holes 46 are provided in each of stay supporting portions 45L and 45R in an aligned relationship with two front and rear hole portions 18 provided in each of the stay members 19L and 19R and to be attached to the vehicle body frame 11. A female threaded portion is formed in each of the stay fastening holes 46. The hole portions 18 are aligned with the stay fastening holes 46, and the stay members 19L and 19R (to which the side bag supporting members 21 L and 21 R are fastened) are fastened to the stay supporting portions 45L and 45R by a plurality of fastening members 26.

The grip members 42L and 42R are integrated with the side bag supporting members 21 L and 21 R; however, side bag supporting members 21 L and 21 R of a type which does not include grip members 42L and 42R may be used instead.

Now, the fourth variation will be described.

As shown in FIG. 10, a vehicle body frame 11 is provided at a rear portion of a motorcycle 10, and stay members 19L and 19R are attached to the vehicle body frame 11. Side bag supporting members 121 L and 121 R, grips 22L and 22R which can be gripped by a passenger on the motorcycle, and a carrier member 23 are attached to the stay members 19L and 19R. Rear cowls 13L and 13R which cover the vehicle body frame 11 are disposed laterally inside of the side bag supporting members 121 L and 121 R and laterally outside of the vehicle body frame 11.

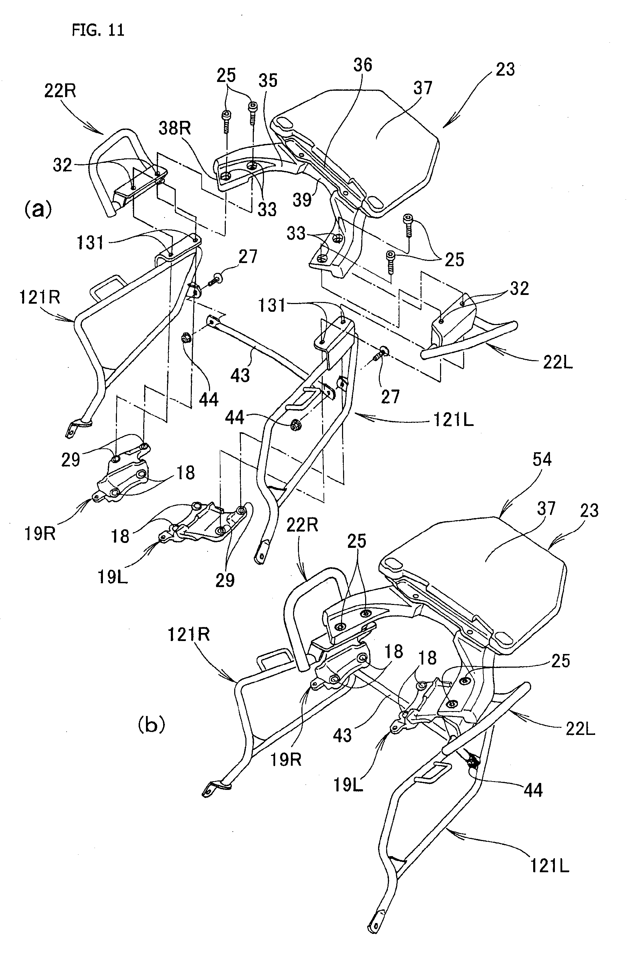

FIG. 11(a) is an exploded perspective view showing how the stay members 19L and 19R, the grips 22L and 22R and the carrier member 23 are to be attached to the stay members 19L and 19R, and FIG. 11 (b) is a perspective view showing a fourth subassembly 54 wherein the side bag supporting members 121 L and 121 R, the grips 22L and 22R and the carrier member 23 are attached to the stay members 19L and 19R.

Referring to FIG. 11 (a), two front and rear first fastening holes 29, in each of which a female threaded portion is formed, are provided in each of the stay members 19L and 19R, and a plurality of second fastening holes 131 are provided in each of the side bag supporting members 121 L and 121 R so as to correspond to the positions of the first fastening holes 29. A plurality of third fastening holes 32 are provided in each of the grips 22L and 22R, and a plurality of fourth fastening holes 33 are provided in the carrier member 23. The side bag supporting members 121 L and 121 R are placed on the stay members 19L and 19R, then the grips 22L and 22R are placed on the side bag supporting members 121 L and 121 R, and then the carrier member 23 is placed on the grips 22L and 22R. Thus, the second fastening holes 131, third fastening holes 32 and fourth fastening holes 33 are aligned with the first fastening holes 29, and the side bag supporting members 121 L and 121 R, grips 22L and 22R and carrier member 23 are fastened to the stay members 19L and 19R from above by a plurality of fastening members 25.

Further, a cross stay 43 which connects the side bag supporting members 121 L and 121 R to each other extends between the side bag supporting members 121 L and 121 R. The cross stay 43 is fastened at opposite end portions thereof to portions at the rear of the side bag supporting members 121 L and 121 R by the fastening members 27 and the nuts 44.

FIG. 11 (b) shows the side bag supporting members 121 L and 121 R and grips 22L and 22R, which are in a state superposed with each other, fastened to the stay members 19L and 19R by a plurality of fastening members 25. In the following description, the side bag supporting members 121 L and 121 R, the grips 22L and 22R and the carrier member 23 are fastened together to the stay members 19L and 19R by the fastening members 25 are referred to as the fourth subassembly 54.

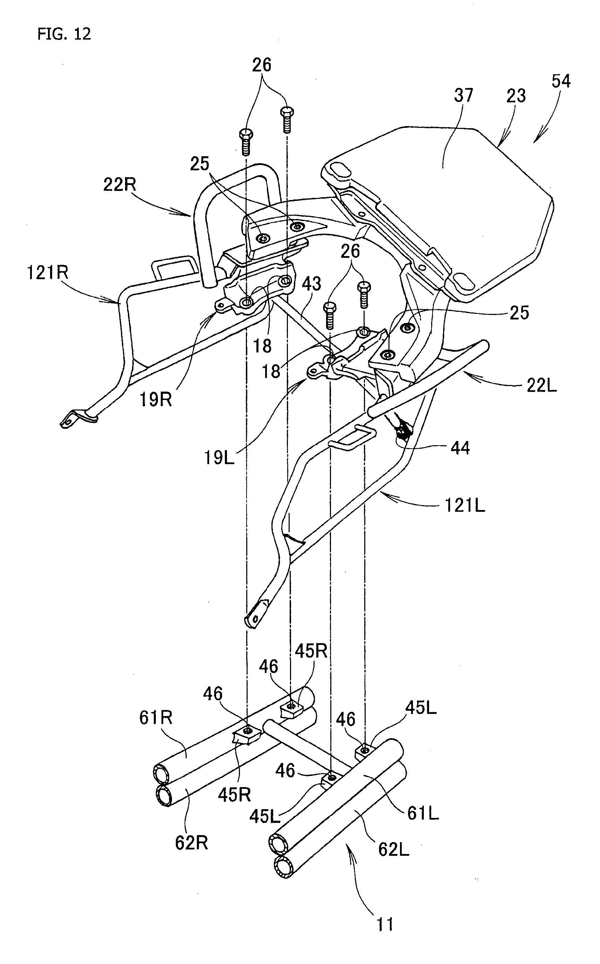

As shown in FIG. 12, two front and rear hole portions 18 to be attached to the vehicle body frame 11 are provided in each of the stay members 19L and 19R, laterally inwards of the first fastening holes 29. Stay fastening holes 46 are provided in the stay supporting portions 45L and 45R in an aligned relationship with the hole portions 18. A female threaded portion is formed in each of the stay fastening holes 46, and the hole portions 18 are aligned with the stay fastening holes 46. The stay members 19L and 19R (to which the side bag supporting members 121 L and 121 R are fastened) are fastened to the stay supporting portions 45L and 45R.

With reference to FIGS. 2, 5, 8 and 11, in the present example, the side bag supporting members 21 L and 21 R with integrated grip members 42L and 42R and the carrier member 23 are fastened to the stay members 19L and 19R with the second fastening holes 31 of the side bag supporting members 21 L and 21 R and the fourth fastening holes 33 of the carrier member 23 aligned with the first fastening holes 29 of the stay members 19L and 19R; or, the grips 22L and 22R and the carrier member 23 are fastened to the stay members 19L and 19R with the third fastening holes 32 of the grips 22L and 22R and the fourth fastening holes 33 of the carrier member 23 aligned with each other; or the side bag supporting members 21 L and 21 R are fastened to the stay members 19L and 19R with the second fastening holes 31 of the side bag supporting members 21 L and 21 R aligned with the first fastening holes 29 of the stay members 19L and 19R; or the side bag supporting members 121 L and 121 R, the grips 22L and 22R and the carrier member 23 are fastened to the stay members 19L and 19R with the second fastening holes 131 of the side bag supporting members 121 L and 121 R, third fastening holes 32 of the grips 22L and 22R and fourth fastening holes 33 of the carrier member 23 aligned with the first fastening holes 29 of the stay members 19L and 19R. Further, there is no problem if the side bag supporting members 121 L and 121 R, the carrier member 23 and the grips 22L and 22R are fastened to the stay members 19L and 19R with the second fastening holes 131 of the side bag supporting members 121 L and 121 R and fourth fastening holes 33 of the carrier member 23 aligned with each other. The second fastening holes 31, second fastening holes 131 or third fastening holes 32 may be aligned with the first fastening holes to fasten the corresponding members to the stay members 19L and 19R.

In the present invention, after the various parts are subassembled to the stay members 19L and 19R to form a subassembly, the subassembly of the stay members 19L and 19R and the various parts is fastened to the stay supporting portions 45L and 45R of the vehicle body frame 11 on a main assembly line. Therefore, variation of the assembly step on the main assembly line becomes less likely to occur. As a result, the productivity in assembly can be improved. Further, since the various parts are attached to the stay supporting portions 45L and 45R through the common stay members 19L and 19R, even if the number of vehicle models increases, a significant modification of the line is not required.

Further, since the positions of the fastening holes (hole portions 18) in the stay members 19L and 19R are aligned with the positions of the fastening holes (stay fastening holes 46) in the stay supporting portions 45L and 45R, there is no need to change the vehicle body frame 11 for each of the various parts. As a result, increase of the number of types of the vehicle body frame can be suppressed and the vehicle cost can be reduced. Further, the common stay members 19L and 19R are used, and the various parts are subassembled to the stay members 19L and 19R in advance and then the subassembled stay members 19L and 19R are fastened to the stay supporting portions 45L and 45R. Therefore, a change in steps is unnecessary (or at least small) when there is a change of the vehicle model, and consequently, it is easier to cope with a change of the vehicle model.

It should be noted that the side bag supporting members may be of the type wherein the grip members 42L and 42R are integrated therewith.

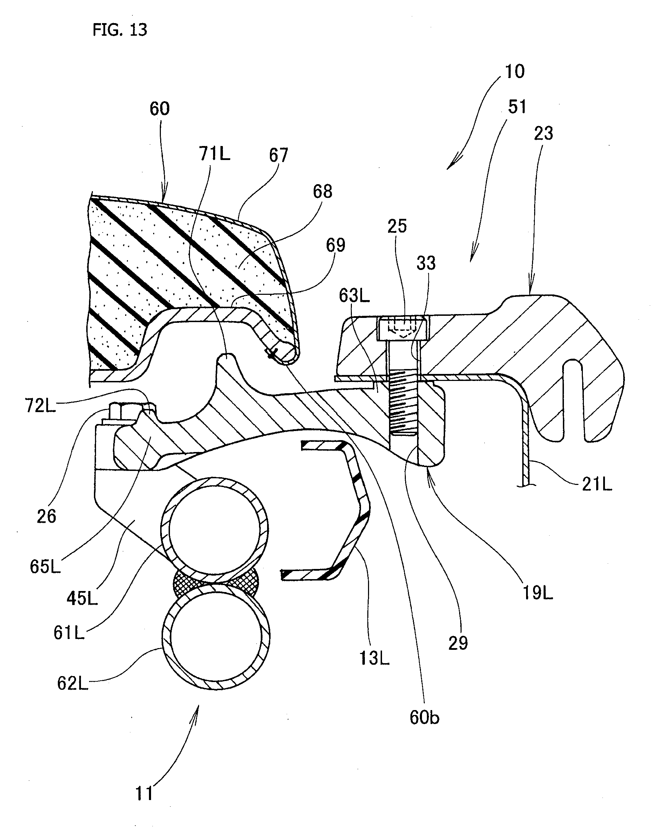

As shown in FIG. 13, the motorcycle 10 (as an example of a saddle type vehicle) includes a seat rail 61 L which is a component of the vehicle body frame 11, a seat 60 which is attached to the seat rail 61 L and which is capable of seating a rider and a passenger, and a stay supporting portion 45L provided on the seat rail 61 L below the seat 60. The stay supporting portion 45L supports a stay member 19L, and a side bag supporting member 21 L and a carrier member 23 are fastened together to the stay member 19L and thus fastened to the stay supporting portion 45L.

The seat 60 includes a bottom plate 69, a cushion section 68 disposed on an upper face of the bottom plate 69, and a seat skin 67 integrated with the bottom plate 69 in such a manner as to cover the cushion section 68.

The stay member 19L attached to the vehicle body frame 11 extends laterally outwardly further than the seat 60, and when the seat 60 is removed, the stay supporting portion 45L is open upwardly.

Referring to FIG. 13, immediately below the seat rail 61 L, there is a support frame 62L which supports the seat rail 61 L. The support frame 62L is fixed to a lower end of the seat rail 61 L and extends along the seat rail 61 L. A rear cowl 13L is disposed laterally outwardly of the seat rail 61 L. In other words, a structure when the first subassembly 51 is attached to the stay member 19L is shown in FIG. 13.

It should be noted that the structure of the stay member 19L to which various parts including the second subassembly and the third subassembly are fastened and the vehicle body frame 11 side to which the stay member 19L is attached is the same as the structure when the first subassembly 51 is attached, and so further description thereof is omitted.

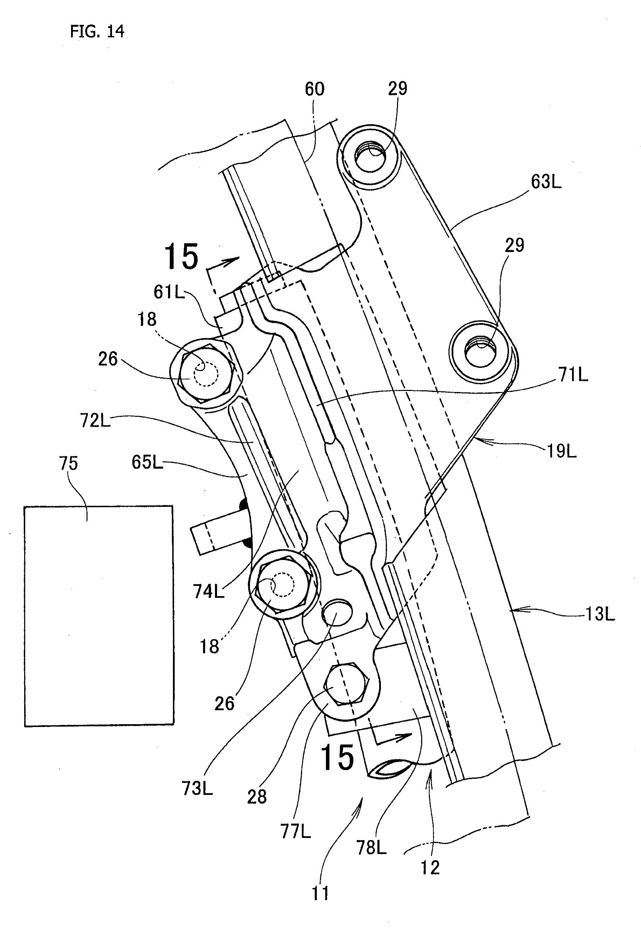

As shown in FIG. 14, the stay member 19L is a forged steel member extending horizontally. The stay member 19L includes an outer side portion 63L positioned laterally further outwardly than the seat 60 as viewed in a plan view. The outer side portion 63L is disposed vertically between the seat 60 and the rear cowl 13L, which covers a side of a rear portion of the vehicle body frame 11. FIG. 14 shows the state in which the subassembly is removed. It should be noted that the stay members, vehicle body frames and so forth as pairs, symmetrically arranged with regard to the lateral centre line of the vehicle.

With further reference to FIG. 14, two front and rear hole portions 18 fastened to the stay supporting portion 45L are provided in the stay member 19L. Below the seat 60, a first rib 71 L, which extends along the direction of the vehicle body frame 11 and projects upwardly so as to be higher than a lower end 60b of a lateral side portion of the seat 60, is formed integrally on the stay member 19L. A second rib 72L, which extends generally in the longitudinal direction of the vehicle so as to connect the two front and rear hole portions 18 to each other, is formed on an inner side portion 65L of the stay member 19L, laterally inwardly from the first rib 71 L.

The first rib 71 L and the second rib 72L extend along the direction of the seat rail 61 L. A valley portion 74L in the form of a generally flat face is provided between the first rib 71 L and the second rib 72L. By means of the first rib 71 L and the second rib 72L, water entering from the outside of the vehicle body can be prevented from reaching an electrical component 75.

The stay member 19L is a forged steel member which extends horizontally and which is disposed between the seat 60 and the rear cowl 13L. By disposing the stay member 19L extending horizontally between the seat 60 and the rear cowl 13L, the seat 60 can be disposed close to the rear cowl 13L and the height of the seat 60 can be kept low. In addition, by disposing the seat 60 near to the rear cowl 13L, the gap between the seat 60 and the rear cowl 13L becomes small, and it becomes difficult for water to enter the inside of the vehicle body. As a result, the height of the seat 60 is kept low and it is difficult for water to enter the inside of the vehicle body.

Further, when the seat 60 is removed, since the stay supporting portion 45L is open upwardly, a fastening tool can be moved toward the stay supporting portion 45L from above. Accordingly, with the stay supporting portion 45L open upwardly, the stay member 19L to which various parts are fastened together can be readily attached to the stay supporting portion 45L.

In an alternative structure wherein the top of the stay supporting portion 45L is not open and is covered, after the various parts are assembled to the stay member 19L, with the various parts, upon attachment, any subassembly stands in the way, and it is likely that it will become difficult to smoothly carry out the work of assembling the subassembly to the vehicle body frame. In addition, there is the possibility that, depending upon the structure of the subassembly, a work to assemble the subassembly to the vehicle body frame may become difficult.

In contrast, since the stay supporting portion 45L here is open upwardly, a fastening tool can be moved toward the stay supporting portion 45L from above. As a result, the productivity in assembly can be improved.

Further, the second rib 72L extending between the two hole portions 18 laterally inside of the first rib 71 L is formed on the inner side of the stay member 19L. Since the second rib 72L extends so as to connect the two hole portions 18 to each other, even if water passes over the first rib 71 L, entry of water into the inside of the vehicle body can be stopped by the second rib 72L. By this second rib 72L, entry of water into the inner side of the vehicle body can be prevented with a higher degree of certainty.

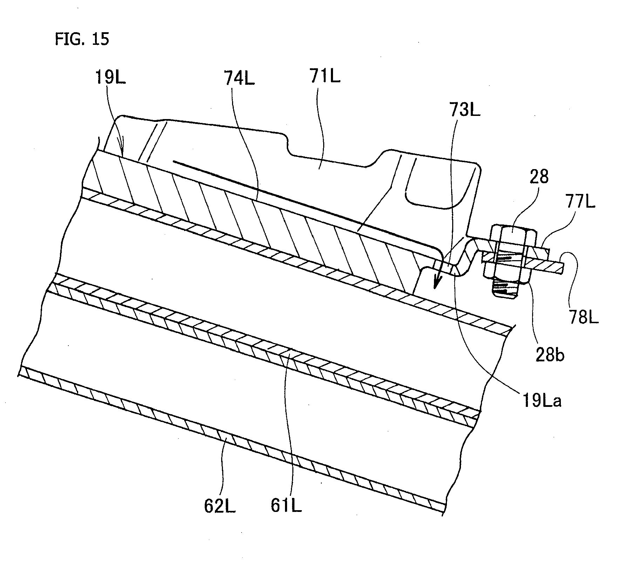

As shown in FIG. 15, the stay member 19L is disposed in a state in which it is inclined forwardly and downwardly, and a drain hole 73L which is disposed to discharge water is formed at a front portion 19La of the stay member 19L laterally inside of the first rib 71 L.

Since the stay member 19L is inclined forwardly and downwardly and the drain hole 73L is provided at the front portion 19La of the stay member 19L, if water entering from the outside of the vehicle body passes over the first rib 71 L, the water flows forwardly and downwardly along the slope and is discharged from the drain hole 73L. As a result, the water passing over the first rib 71 L can be discharged readily.

A supporting structure for the rear cowl 13L will now be described.

An inner side flange 78L of the rear cowl 13L is abutted with a lower face of a front end flange 77L provided at a front end of the stay member 19L. The rear cowl 13L is attached to the stay member 19L by a fastening member 28 and a nut 28b.

With reference to FIGS. 16 to 19, details of the side bag supporting members 21 L and 21 R and the side bags 24L and 24R supported on the side bag supporting members 21 L and 21 R will now be described.

As shown in FIG. 16, left and right side bags 24L and 24R are mounted individually on left and right side bag supporting members 21 L and 21 R, which form the third subassembly 53 described hereinabove. The left and right side bags 24L and 24R are formed from container portions 81 L and 81 R, and lid portions 82L and 82R which cover the container portions 81 L and 81 R, respectively.

In the following, the right side bag supporting member 21 R will be described in detail. The structure of the left side bag supporting member 21 L is symmetrical with to the right side bag supporting member 21 R with respect to the lateral centre line of the vehicle, and therefore, description of the same is omitted.

As principal components thereof, the right side bag supporting member 21 R includes a first stay portion 84R to be attached to the vehicle body frame 11, a front arm 86R extending substantially upwardly from the first stay portion 84R, and an upper arm 87R extending rearwardly in the longitudinal direction of the vehicle from an upper end of the front arm 86R. The right side bag supporting member 21 R further includes a rear arm 88R extending substantially downwardly from a rear end of the upper arm 87R, a lower arm 89R extending forwardly from a lower end of the rear arm 88R and connected to the front arm 86R, and a second stay 85R fixed to a rear portion of the upper arm 87R and serving as a seat to be fastened to the stay member 19R. The right side bag supporting member 21 R further includes a grip portion 42R extending upwardly from the second stay 85R and connected to an intermediate portion of the rear arm 88R.

An upper stay supporting portion 101 R of the side bag 24R is hung on the upper arm 87R, and a lower stay supporting portion 102R of the side bag 24R is hung on the lower arm 89R. The side bag 24R is thus removably supported on the side bag supporting member 21 R.

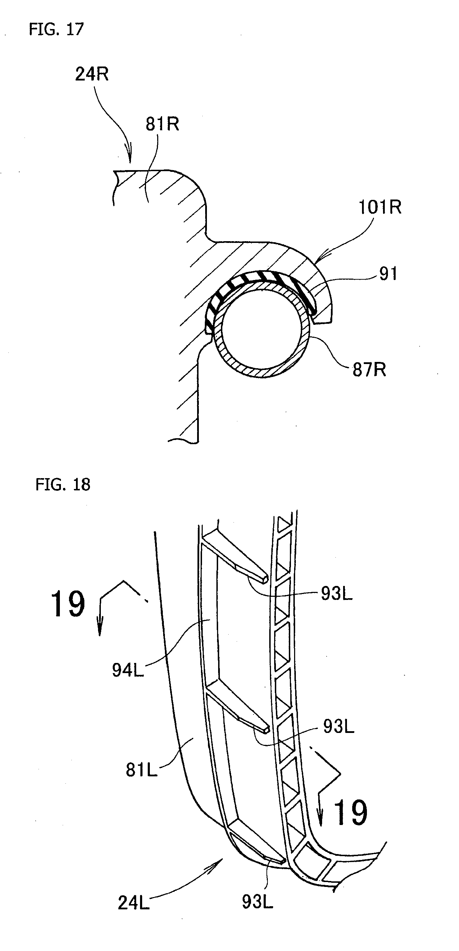

As shown in FIG. 17, the upper stay supporting portion 101 R is locked on a pipe-shaped stay (upper arm 87R) through an elastic member 91. The lower stay supporting portion 102R shown in FIG. 16 is also locked on a pipe-shaped stay

(lower arm 89R) through an elastic member (not shown). By interposing the elastic members on the lower stay supporting portion 102R and the upper stay supporting portion 101 R, it is less likely that vibration of the side bag supporting member 21 R provided on the vehicle body frame (reference numeral 11 in FIG. 1) will be transmitted to the side bag 24R. Consequently, vibration can be favourably suppressed.

The side bag 24R includes an upper stay supporting portion 101 R and a lower stay supporting portion 102R which are locked to the vehicle body side. As the side bag 24R has the upper stay supporting portion 101 R and the lower stay supporting portion 102R, it can also be used with a vehicle which has a pipe-shaped stay at one of upper and lower portions. In addition, the side bag 24R can also be used with a vehicle of the type which does not have a pipe-shaped stay but has a side bag attaching hole, for example, in a rear cowl.

A structure of the container portion 81 L and the lid portion 82L of the side bag 24L, and in particular how they fit together, will now be described. Although a description of the structure of the left side bag 24L is given below, the structure of the right side bag 24R is symmetrical with that of the left side bag 24L, and the operation thereof is also similar. Thus, detailed description of the right side bag 24R is omitted.

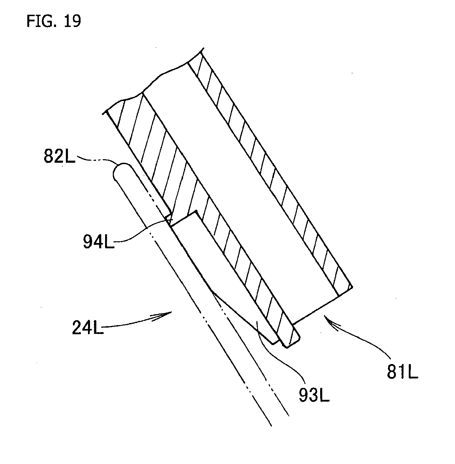

As shown in FIGS. 18 and 19, a plurality of ribs 93L, by means of which the lid portion 82L is smoothly guided and fitted onto the container portion 81 L, are formed on the container portion 81 L, and point in the direction of the lid portion 82L. A further rib 94L which prevents entry of water extends perpendicular to the direction in which the ribs 93L extend.

The container portion 81 L which configures the side bag 24L includes the ribs 93L and the further rib 94L which extends in a direction perpendicular to the ribs 93L. Since the ribs 93L are provided in the direction of the lid portion 82L, when the lid portion 82L is fitted onto (closed onto) the container portion 81 L, the inner face of the lid portion 82L slips along the ribs 93L. Consequently, the lid portion 82L can be fitted smoothly onto the container portion 81 L. Further, since the further rib 94L is provided, it is difficult for water to enter the vessel beyond the further rib 94L, and thus it is difficult for water to enter the container portion 81 L.

It should be noted that, although the present embodiment of the invention is applied to a motorcycle, it can be applied also to a saddle type three-wheeled car, and there is no problem if it is applied to a general saddle type vehicle.

The present invention is suitably applied to a motorcycle wherein various parts are provided at a rear portion of the vehicle through a stay member.

## Claims

1. A rear portion structure for a saddle type vehicle which includes a vehicle body frame (11), a seat (60) attached to the vehicle body frame (11) and capable of seating a rider and a passenger, and a stay supporting portion (45L, 45R) provided on the vehicle body frame (11) below the seat (60) and supporting a stay member (19L, 19R) thereon,
said structure further includes various parts attached to the stay member (19L, 19R), wherein
the various parts include a side bag supporting member (21 L, 21 R) with an integrated grip portion (42L, 42R) for being gripped by a passenger on the vehicle and which supports a side bag (24L, 24R), and a carrier member (23) for supporting an article of luggage;
a first fastening hole (29) is provided in the stay member (19L, 19R);
a second fastening hole (31) is provided in the side bag supporting member (21L, 21R);
a fourth fastening hole (33) is provided in the carrier member (23);
**characterized in that**
the stay member (19L, 19R) extends laterally outwardly further than the seat (60); and
the second fastening hole (31) or the second fastening hole (31) and the fourth fastening hole (33) are aligned with the first fastening hole (29), and the side bag supporting member (21 L, 21 R) with the integrated grip portion (42L, 42R) or the side bag supporting member (21 L, 21 R) with the integrated grip portion (42L, 42R) and the carrier member (23) are fastened to the stay member (19L, 19R) by a fastening member or members (25).

2. A rear portion structure for a saddle type vehicle which includes a vehicle body frame (11), a seat (60) attached to the vehicle body frame (11) and capable of seating a rider and a passenger, and a stay supporting portion (45L, 45R) provided on the vehicle body frame (11) below the seat (60) and supporting a stay member (19L, 19R) thereon,
said structure further includes various parts attached to the stay member (19L, 19R), wherein
the various parts include at least two of a side bag supporting member (121 L, 121 R) for supporting a side bag (24L, 24R), a grip (22L, 22R) for being gripped by the passenger on the vehicle, and a carrier member (23) for supporting an article of luggage;
a first fastening hole (29) is provided in the stay member (19L, 19R);
a second fastening hole (131) is provided in the side bag supporting member (121 L, 121 R);
a third fastening hole (32) is provided in the grip (22L, 22R);
a fourth fastening hole (33) is provided in the carrier member (23);
**characterized in that**
the stay member (19L, 19R) extends laterally outwardly further than the seat (60); and
at least two of the second fastening hole (131), third fastening hole (32) and fourth fastening hole (33) are aligned with the first fastening hole (29), and two or all three of the side bag supporting member (121 L, 121 R), grip (22L, 22R), and carrier member (23) are fastened together to the stay member (19L, 19R).

3. The rear portion structure for a saddle type vehicle according to claim 1 or 2, wherein the stay member (19L, 19R) is a forged steel part which extends horizontally and includes an outer side portion (63L, 63R) positioned laterally outwardly further than the seat (60), and is disposed between the seat (60) and a rear cowl (13L, 13R) which covers a side of a rear portion of the vehicle body frame (11); and
when the seat (60) is removed, the stay supporting portion (45L, 45R) is open upwardly.

4. The rear portion structure for a saddle type vehicle according to any one of claims 1 to 3, wherein two front and rear hole portions (18) to be fastened to the stay supporting portion (45L, 45R) are provided in the stay member (19L, 19R);
and a first rib (71 L, 71 R) which extends in the direction of the vehicle body frame (11) below the seat (60) and projects upwardly so as to be higher than a lower end (60b) of a lateral side portion of the seat (60), and a second rib (72L, 72R) which extends so as to connect the two front and rear hole portions (18) to each other laterally inwardly from the first rib (71 L, 71 R), are formed at a laterally inner side portion of the stay member (19L, 19R).

5. The rear portion structure for a saddle type vehicle according to 4, wherein the stay member (19L, 19R) is disposed so as to be inclined forwardly downwardly, and a drain hole (73L, 73R) disposed laterally inwardly from the first rib (71 L, 71 R) for discharging water therethrough is formed at a front portion of the stay member (19L, 19R).

6. The rear portion structure for a saddle type vehicle according to any one of claims 1 to 5, wherein the side bag supporting member (21 L, 21 R) includes a pair of upper and lower pipe-shaped stays extending in a longitudinal direction of the vehicle;
the side bag (24L, 24R) includes an upper stay supporting portion (101 L, 101 R) and a lower stay supporting portion (1 02L, 102R) locked from above to the paired upper and lower pipe-shaped stays; and
the upper stay supporting portion (45L, 45R) and the lower stay supporting portion (45L, 45R) are locked by the paired upper and lower pipe-shaped stays each through with elastic members (91) interposed therebetween.

7. The rear portion structure for a saddle type vehicle according to any one of claims 1 to 6, wherein the side bag (24L, 24R) includes a container portion (81 L, 81 R) and a lid portion (82L, 82R) which covers the container portion (81 L, 81 R); and
a plurality of ribs (93L, 93R) for allowing the lid portions (82L, 82R) to be guided and fitted smoothly are formed on the container portion (81 L, 81 R) and point in the direction of the lid portion (82L, 82R), and a further rib (94L, 94R) for preventing water from entering extends perpendicular to the ribs (93L and 93R).

## Patentansprüche

1. Hinterabschnittstruktur für ein sattelartiges Fahrzeug, der Folgendes enthält: einen Fahrzeugrahmen (11), einen Sitz (60), der an dem Fahrzeugrahmen (11) angebracht ist und eine Sitzgelegenheit für einen Fahrer und einen Mitfahrer bieten kann, und einen Absteifungsstützabschnitt (45L, 45R), der an dem Fahrzeugrahmen (11) unter dem Sitz (60) angeordnet ist und ein Absteifungselement (19L, 19R) daran stützt.
wobei die Struktur des Weiteren verschiedene Teile enthält, die an dem Absteifungselement (19L, 19R) angebracht sind, wobei
die verschiedenen Teile ein Seitentaschenstützelement (21L, 21R) mit einem integrierten Griffabschnitt (42L, 42R), der dafür vorgesehen ist, von einem Mitfahrer auf dem Fahrzeug ergriffen zu werden, und das eine Seitentasche (24L, 24R) stützt, sowie ein Trägerelement (23) zum Stützen eines Gepäckstücks enthalten;
ein erstes Befestigungsloch (29) in dem Absteifungselement (19L, 19R) angeordnet ist;
ein zweites Befestigungsloch (31) in dem Seitentaschenstützelement (21L, 21R) angeordnet ist;
ein viertes Befestigungsloch (33) in dem Trägerelement (23) angeordnet ist;
**dadurch gekennzeichnet, dass**
sich das Absteifungselement (19L, 19R) seitlich weiter nach außen erstreckt als der Sitz (60); und
das zweite Befestigungsloch (31) oder das zweite Befestigungsloch (31) und das vierte Befestigungsloch (33) auf das erste Befestigungsloch (29) ausgerichtet sind, und das Seitentaschenstützelement (21L, 21R) mit dem integrierten Griffabschnitt (42L, 42R) oder das Seitentaschenstützelement (21L, 21R) mit dem integrierten Griffabschnitt (42L, 42R) und das Trägerelement (23) an dem Absteifungselement (19L, 19R) durch ein oder mehrere Befestigungselemente (25) befestigt sind.

2. Hinterabschnittstruktur für ein sattelartiges Fahrzeug, der Folgendes enthält: einen Fahrzeugrahmen (11), einen Sitz (60), der an dem Fahrzeugrahmen (11) angebracht ist und eine Sitzgelegenheit für einen Fahrer und einen Mitfahrer bieten kann, und einen Absteifungsstützabschnitt (45L, 45R), der an dem Fahrzeugrahmen (11) unter dem Sitz (60) angeordnet ist und ein Absteifungselement (19L, 19R) daran stützt,
wobei die Struktur des Weiteren verschiedene Teile enthält, die an dem Absteifungselement (19L, 19R) angebracht sind, wobei
die verschiedenen Teile mindestens zwei von einem Seitentaschenstützelement (121L, 121R) zum Stützen einer Seitentasche (24L, 24R), einem Griff (22L, 22R), der dafür vorgesehen ist, von dem Mitfahrer auf dem Fahrzeug ergriffen zu werden, und einem Trägerelement (23) zum Stützen eines Gepäckstücks enthalten;
ein erstes Befestigungsloch (29), das in dem Absteifungselement (19L, 19R) angeordnet ist;
ein zweites Befestigungsloch (131), das in dem Seitentaschenstützelement (121L, 121R) angeordnet ist;
ein drittes Befestigungsloch (32), das in dem Griff (22L, 22R) angeordnet ist;
ein viertes Befestigungsloch (33), das in dem Trägerelement (23) angeordnet ist;
**dadurch gekennzeichnet, dass**
sich das Absteifungselement (19L, 19R) seitlich weiter nach außen erstreckt als der Sitz (60); und
mindestens zwei von dem zweiten Befestigungsloch (131), dem dritten Befestigungsloch (32) und dem vierten Befestigungsloch (33) auf das erste Befestigungsloch (29) ausgerichtet sind, und zwei oder alle drei des Seitentaschenstützelements (121L, 121R), des Griffs (22L, 22R) und des Trägerelements (23) gemeinsam an dem Absteifungselement (19L, 19R) befestigt sind.

3. Hinterabschnittstruktur für ein sattelartiges Fahrzeug nach Anspruch 1 oder 2, wobei das Absteifungselement (19L, 19R) ein Teil aus geschmiedetem Stahl ist, das sich horizontal erstreckt und einen Außenseitenabschnitt (63L, 63R) enthält, der seitlich weiter nach außen positioniert ist als der Sitz (60), und zwischen dem Sitz (60) und einer hinteren Verkleidung (13L, 13R), die eine Seite eines hinteren Abschnitts des Fahrzeugrahmens (11) bedeckt, angeordnet ist; und
wenn der Sitz (60) abgenommen wurde, der Absteifungsstützabschnitt (45L, 45R) nach oben offen ist.

4. Hinterabschnittstruktur für ein sattelartiges Fahrzeug nach einem der Ansprüche 1 bis 3, wobei zwei vordere und hintere Lochabschnitte (18), die an dem Absteifungsstützabschnitt (45L, 45R) zu befestigen sind, in dem Absteifungselement (19L, 19R) bereitgestellt sind;
und eine erste Rippe (71L, 71R), die sich in der Richtung des Fahrzeugrahmens (11) unter dem Sitz (60) erstreckt und so nach oben ragt, dass sie höher als ein unteres Ende (60b) eines lateralen Seitenabschnitts des Sitzes (60) ist, und eine zweite Rippe (72L, 72R), die sich so erstreckt, dass sie die zwei vorderen und hinteren Lochabschnitte (18) seitlich einwärts von der ersten Rippe (71L, 71R) miteinander verbindet, an einem seitlich inneren Seitenabschnitt des Absteifungselements (19L, 19R) ausgebildet sind.

5. Hinterabschnittstruktur für ein sattelartiges Fahrzeug nach Anspruch 4, wobei das Absteifungselement (19L, 19R) so angeordnet ist, dass es abwärts nach vorn geneigt ist, und Abflussloch (73L, 73R), das seitlich einwärts von der ersten Rippe (71L, 71R) zum Ablassen von Wasser angeordnet ist, an einem vorderen Abschnitt des Absteifungselements (19L, 19R) ausgebildet ist.

6. Hinterabschnittstruktur für ein sattelartiges Fahrzeug nach einem der Ansprüche 1 bis 5, wobei das Seitentaschenstützelement (21L, 21R) ein Paar oberer und unterer rohrförmiger Absteifungen enthält, die sich in einer Längsrichtung des Fahrzeugs erstrecken;
wobei die Seitentasche (24L, 24R) einen oberen Absteifungsstützabschnitt (101L, 101R) und einen unteren Absteifungsstützabschnitt (102L, 102R) enthält, die von oben her an den zu einem Paar ausgebildeten oberen und unteren rohrförmigen Absteifungen verriegelt sind; und
der obere Absteifungsstützabschnitt (45L, 45R) und der untere Absteifungsstützabschnitt (45L, 45R) durch die zu einem Paar ausgebildeten oberen und unteren rohrförmigen Absteifungen jeweils mit elastischen Elementen (91) dazwischen verriegelt sind.

7. Hinterabschnittstruktur für ein sattelartiges Fahrzeug nach einem der Ansprüche 1 bis 6, wobei die Seitentasche (24L, 24R) einen Behälterabschnitt (81L, 81R) und einen Deckelabschnitt (82L, 82R), der den Behälterabschnitt (81L, 81R) bedeckt, enthält; und
mehrere Rippen (93L, 93R), die es ermöglichen, die Deckelabschnitte (82L, 82R) zu führen und sanft einzupassen, an dem Behälterabschnitt (81L, 81R) ausgebildet sind und in die Richtung des Deckelabschnitts (82L, 82R) weisen, und eine weitere Rippe (94L, 94R) zum Verhindern, dass Wasser eindringt, sich senkrecht zu den Rippen (93L und 93R) erstreckt.

## Revendications

1. Structure de partie arrière pour un véhicule de type à selle qui inclut un cadre corps carrosserie de véhicule (11), un siège (60) attaché au cadre de corps de véhicule (11) et susceptible d'asseoir un conducteur et un passager, et une partie supportant un appui (45L, 45R) disposée sur le cadre de corps de véhicule (11) au-dessous du siège (60) et supportant un élément d'appui (19L, 19R) dessus,
ladite structure inclut en outre diverses pièces attachées à l'élément d'appui (19L, 19R), dans laquelle
les diverses pièces incluent un élément supportant une sacoche latérale (21 L, 21 R) avec une partie formant poignée intégrée (42L, 42R) à agripper par un passager sur le véhicule et qui supporte une sacoche latérale (24L, 24R), et un élément porteur (23) pour supporter un article de bagage;
un premier trou de fixation (29) est prévu dans l'élément d'appui (19L, 19R) ;
un deuxième trou de fixation (31) est prévu dans l'élément supportant une sacoche latérale (21L, 21R) ;
un quatrième trou de fixation (33) est prévu dans l'élément porteur (23);
**caractérisée en ce que**
l'élément d'appui (19L, 19R) s'étend latéralement vers l'extérieur plus loin que le siège (60) ; et
le deuxième trou de fixation (31) ou le deuxième trou de fixation (31) et le quatrième trou de fixation (33) sont alignés sur le premier trou de fixation (29), et l'élément supportant une sacoche latérale (21L, 21R) avec la partie formant poignée intégrée (42L, 42R) ou l'élément supportant une sacoche latérale (21L, 21R) avec la partie formant poignée intégrée (42L, 42R) et l'élément porteur (23) sont fixés à l'élément d'appui (19L, 19R) par un élément ou des éléments de fixation (25).

2. Structure de partie arrière pour un véhicule de type à selle qui inclut un cadre de corps de véhicule (11), un siège (60) attaché au cadre de corps de véhicule (11) et susceptible d'asseoir un conducteur et un passager, et une partie supportant un appui (45L, 45R) disposée sur le cadre de corps de véhicule (11) au-dessous du siège (60) et supportant un élément d'appui (19L, 19R) dessus,
ladite structure inclut en outre diverses pièces attachées à l'élément d'appui (19L, 19R), dans laquelle
les diverses pièces incluent au moins deux d'un l'élément supportant une sacoche latérale (121L, 121R) pour supporter une sacoche latérale (24L, 24R), une poignée (22L, 22R) pour être agrippée par le passager sur le véhicule, et un élément porteur (23) pour supporter un article de bagage ;
un premier trou de fixation (29) est prévu dans l'élément d'appui (19L, 19R) ;
un deuxième trou de fixation (131) est prévu dans l'élément supportant une sacoche latérale (121L, 121R) ;
un troisième trou de fixation (32) est prévu dans la poignée (22L, 22R) ;
un quatrième trou de fixation (33) est prévu dans l'élément porteur (23) ;
**caractérisée en ce que**
l'élément d'appui (19L, 19R) s'étend latéralement vers l'extérieur plus loin que le siège (60) ; et
au moins deux du deuxième trou de fixation (131), du troisième trou de fixation (32) et du quatrième trou de fixation (33) sont alignés sur le premier trou de fixation (29), et deux ou la totalité des trois de l'élément supportant une sacoche latérale (121L, 121R), de la poignée (22L, 22R) et de l'élément porteur (23) sont fixés ensemble à l'élément d'appui (19L, 19R).

3. Structure de partie arrière pour un véhicule de type à selle selon la revendication 1 ou 2, dans laquelle l'élément d'appui (19L, 19R) est une pièce forgée d'acier qui s'étend horizontalement et inclut une partie latérale extérieure (63L, 63R) positionnée latéralement à l'extérieur plus loin que le siège (60), et est disposée entre le siège (60) et un capuchon arrière (13L, 13R) qui couvre un côté d'une partie arrière du cadre de corps de véhicule (11) ; et
lorsque le siège (60) est enlevé, la partie supportant un appui (45L, 45R) est ouverte vers le haut.

4. Structure de partie arrière pour un véhicule de type à selle selon n'importe laquelle des revendications 1 à 3, dans laquelle deux parties formant trous avant et arrière (18) à fixer à la partie supportant un appui (45L, 45R) sont prévues dans l'élément d'appui (19L, 19R) ;
et une première nervure (71L, 71R) qui s'étend dans la direction du cadre de corps de véhicule (11) au-dessous du siège (60) et dépasse vers le haut afin d'être plus haute qu'une extrémité inférieure (60b) d'une partie formant côté latéral du siège (60), et une seconde nervure (72L, 72R) qui s'étend afin de relier les deux parties formant trou avant et arrière (18) l'une à l'autre latéralement vers l'intérieur à partir de la première nervure (71L, 71R), sont formées au niveau d'une partie formant côté latéral intérieur de l'élément d'appui (19L, 19R).

5. Structure de partie arrière pour un véhicule de type à selle selon la revendication 4, dans laquelle l'élément d'appui (19L, 19R) est disposé afin d'être incliné vers l'avant vers le bas, et un trou d'écoulement (73L, 73R) disposé latéralement vers l'intérieur par rapport à la première nervure (71L, 71R) pour évacuer l'eau à travers ce dernier est formé au niveau d'une partie avant de l'élément d'appui (19L, 19R).

6. Structure de partie arrière pour un véhicule de type à selle selon n'importe laquelle des revendications 1 à 5, dans laquelle l'élément supportant une sacoche latérale (21L, 21R) inclut un couple d'appuis supérieur et inférieur en forme de tuyau s'étendant dans une direction longitudinale du véhicule ;
la sacoche latérale (24L, 24R) inclut une partie supportant un appui supérieur (101L, 101R) et une partie supportant un appui inférieur (102L, 102R) verrouillés d'en haut aux appuis supérieur et inférieur appariés en forme de tuyau ; et
la partie supportant un appui supérieur (45L, 45R) et la partie supportant un appui inférieur (45L, 45R) sont verrouillées par les appuis supérieur et inférieur appariés en forme de tuyau chacun par l'intermédiaire d'éléments élastiques (91) interposés entre ces derniers.

7. Structure de partie arrière pour un véhicule de type à selle selon n'importe laquelle des revendications 1 à 6, dans laquelle la sacoche latérale (24L, 24R) inclut une partie formant conteneur (81L, 81R) et une partie formant couvercle (82L, 82R) qui couvre la partie formant conteneur (81L, 81R) ; et
une pluralité de nervures (93L, 93R) pour permettre aux parties formant couvercle (82L, 82R) d'être guidées et ajustées sans à-coup sont formées sur la partie formant conteneur (81L, 81R) et pointent dans la direction de la partie formant couvercle (82L, 82R), et une nervure supplémentaire (94L, 94R) pour empêcher l'eau d'entrer s'étend perpendiculairement aux nervures (93L et 93R).
